# EUROPEAN PATENT SPECIFICATION

(11) **EP 4 227 521 B1**
(45) Date of publication and mention of the grant of the patent: **04.12.2024**
(21) Application number: 22156668.0
(22) Date of filing: 14.02.2022
(51) Int. Cl.: F03D 1/06, F03D 80/00, B29C 65/78, B29D 99/00

(54) **SPAR WEB ASSEMBLIES AND SUITABLE FASTENER ASSEMBLIES AND METHODS**
HOLMBAHNANORDNUNG UND GEEIGNETE BEFESTIGUNGSANORDNUNGEN UND -VERFAHREN
ENSEMBLES ÂMES DE LONGERON ET ENSEMBLES FIXATION ADAPTÉS ET PROCÉDÉS

(43) Date of publication of application: 16.08.2023
(73) Proprietor: LM Wind Power A/S, 6000 Kolding (DK)
(72) Inventor: KHALAFAGHIAN, Mgo Mike, 50110 Cherbourg-Octeville (FR)
(74) Representative: Bardehle Pagenberg S.L.

(56) References cited:
- EP-B1- 2 742 234
- WO-A1-2020/216924
- CN-A- 106 594 030
- CN-U- 213 331 389

## Description

### FIELD

The present disclosure relates to fastener assemblies, and more particularly fastener assemblies to connect a first web with a second web. The present disclosure further relates to main web assemblies for wind turbine blades and to methods for assembling and disassembling two webs.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly ("directly driven") or through the use of a gearbox. This way, the generator produces electricity which can be supplied to the electrical grid.

In order to extract more energy from the wind, the size of the rotor diameter is increased by increasing the dimensions of the wind turbine blades. To reduce the overall weight of the wind turbine blades, these may generally comprise composite materials and are often manufactured with resin-infused glass fiber composites. The manufacturing of wind turbine blade shells using composite materials allows them to meet the requirements with respect to size, geometry, and weight. Further, fibers can be aligned with load paths, generating blades with anisotropic mechanical properties and with enhanced mechanical properties. The possibility of fiber alignment allows placing the fibers at the exact position and direction as needed to provide the component with the required stiffness and strength.

The shells of the wind turbine blades carry part of the load and maintain an aerodynamic shape. The main load bearing structures in wind turbine blades are formed by spars. A spar in a wind turbine blade may comprise a spar cap near the suction side of the blade and a spar cap near the pressure side of the blade, and a shear web between the spar caps. The shear web is generally formed like a plate configured to be subjected to shear loads.

Depending on the length, and configuration of the blades, and depending on the design loads, spars with different configurations may be used. In some examples, a blade may include a main web assembly, including a leading edge main web and a trailing edge main web, i.e. two main webs, the former of which is arranged closer to the leading edge, and the latter being arranged closer to the trailing edge of the blade. The main web assembly may extend from a root of a blade to close to a tip of the blade. The blade may further comprise a third shear web which may extend from a root towards about half or about two thirds of the blade, and may also comprise a C-shaped stiffener in an inboard section of the blade near the trailing edge.

During manufacturing, a shell of the blade may be formed, e.g. two half-shells, particularly a downwind shell (for the suction side of the blade) and an upwind shell (for the pressure side of the blade) may be formed. The webs may be positioned in a mold in one half-shell and the other half-shell may be positioned on top, after which the parts are joined.

It is known for the main web assembly to be assembled before positioning in the mold. The main leading edge web, and the trailing edge web are connected to each other through a plurality of staybolts. The staybolts comprise a shaft with threaded portions on each end. A tubular spacer is arranged around the shaft. Between each end of the tubular spacer and the corresponding web a washer may be arranged. At both ends of the shaft, on the outside of the assembly, an additional washer may be arranged, and nuts are mounted on the ends of the shaft. Each of the webs is thus retained between a washer and tube on an inside of the web assembly, and a washer and nut on the outside of the web assembly.

Since the webs may be arranged close to each other (particularly for portions closer to the tip of the blade), it is a complicated manual process to fix the washers, and tubular spacers of the different staybolts in place. Additionally, after the main web assembly has been joined to the blade shells, the staybolts are to be removed, but this means that an operator needs to enter the space inside the main web assembly to remove the washers, and tubular spacers. This is a cumbersome manual process which poses significant safety and health concerns. In practice not all spacers, and washers on an inside of the main web assembly can be removed.

EP2742234 B1, CN213331389 U, WO 2020/216924 A1 show different known examples of a fastener assembly for connecting a first web to a second web.

The present disclosure provides examples of systems and methods that at least partially overcome some of the drawbacks of existing wind turbine blade manufacturing processes, and in particular facilitate assembling and disassembling main web assemblies.

### SUMMARY

In a first aspect, a fastener assembly for connecting a first web to a second web is disclosed. An inside is defined between the first and second webs, and an inner surface of the first web faces an inner surface of the second web, an outer surface of the first web being arranged on an outside of the first web, and an outer surface of the second web being arranged on an outside of the second web. The fastener assembly comprises a shaft, a first fastener, and a second fastener.

The shaft has a first end configured to be arranged with the first web, a second end configured to be arranged on the outside of the second web, and a central portion configured to be arranged between the first and second webs. The central portion includes one or more stoppers near the first end, the stoppers having a retracted position wherein the stoppers substantially do not protrude beyond an outer surface of the central portion and a deployed position wherein the stoppers protrude beyond the outer surface of the central portion such that the first web can be fixed between the stoppers and the first fastener when mounted on the first end of the shaft.

The central portion has a cross-sectional area that is larger than the cross-sectional area of the second end such that the second web can be fixed between the second fastener when mounted on the second end of the shaft and the central portion of the shaft, and the stoppers are configured to be deployed from the outside of the first web.

In accordance with this aspect, a fastener assembly is provided which can connect two webs to each other, wherein the assembly of the two webs can be mounted and unmounted from an outside of the assembly. I.e. an operator does not have to reach into the space between the webs to mount or unmount the fasteners. The fastener assembly may be used e.g. in the assembly of a main shear web assembly, and in the manufacture of a wind turbine blade, but other implementations are possible as well.

On one end, a web is fixed between a fastener on an outside and a portion of the shaft of the fastener assembly. Due to an increase in dimensions, e.g. diameter, of the central portion of the shaft with respect to the second end of the shaft, the web will inevitably engage and be nested against the portion of the shaft with increased size. At the opposite end, the web is also fixed and retained between a fastener on the outside and stoppers on an inside. The stopper can be deployed to perform their stopper function from an outside of the web assembly.

Throughout the present disclosure, a web may be regarded as any form of plate i.e. any relatively flat and thin piece of material. Thin herein may be understood to mean that length and width of the plate are orders of magnitude larger than the thickness. The webs may be made of any suitable structural material, in particular they may be made of composite or metal material. The webs may form part of an assembly including caps or flanges at the ends of the webs.

In a further aspect, a main web assembly for a wind turbine blade is disclosed. The main web assembly comprises a first shear web and a second shear web. An inside is defined between the first and second shear webs, and an inner surface of the first web faces an inner surface of the second web, an outer surface of the first web being arranged on an outside of the first web, and an outer surface of the second being arranged an on outside of the second web.

The first and second shear webs are connected through a plurality of fastener assemblies comprising a shaft, a first fastener, and a second fastener. The shaft has a first end arranged with the first shear web, a second end arranged on the outside of the second shear web, and a central portion arranged between the first and second shear webs. The central portion includes one or more stoppers near the first end, the stoppers having a retracted position wherein the stoppers substantially do not protrude beyond an outer surface of the central portion and a deployed position wherein the stoppers protrude beyond the outer surface of the central portion such that the first shear web is fixed between the stoppers and the first fastener mounted on the first end of the shaft.

The central portion has a cross-sectional area that is larger than a cross-sectional area of the second end and the second shear web is fixed between the second fastener mounted on the shaft and the central portion of the shaft, and wherein the stoppers are configured to be deployed from an outside of the first shear web.

In yet a further aspect, a method for assembling a main web assembly of a wind turbine blade is disclosed. The method comprises arranging a leading edge shear web with a trailing edge shear web such that an inner surface of the leading edge shear web faces an inner surface of the trailing edge shear web, an inside of the main web assembly being defined between the leading edge shear web and the trailing edge shear web. The method further comprises connecting the leading edge shear web to the trailing edge shear web by mounting a plurality of fastener assemblies.

The mounting of one of the fastener assemblies comprises introducing a shaft from an outside of the main web assembly through a hole in a first shear web selected from the leading and trailing edge shear webs and subsequently through a hole in a second shear web selected from the leading and trailing edge shear webs, until a second end of the shaft extends through the second shear web to an outside of the main web assembly, and a central portion of the shaft engages with the second shear web.

The method further comprises deploying one or more stoppers in the central portion to protrude beyond an outer surface of the central portion of the shaft and mounting a first fastener on the first end of the shaft to retain the first shear web between the stoppers and the first fastener and mounting a second fastener on the second end of the shaft to retain the second shear web between the second fastener and the central portion of the shaft, wherein the stoppers are deployed from an outside of the main web assembly.

### BRIEF DESCRIPTION OF THE DRAWINGS

Non-limiting examples of the present disclosure will be described in the following, with reference to the appended drawings, in which:
Figure 1 illustrates a perspective view of a wind turbine according to one example;
Figure 2A is a schematic diagram illustrating a wind turbine blade according to one example;
Figure 2B schematically illustrates an internal structure of a wind turbine blade;
Figure 2C illustrates a molding system which may be used in the manufacture of a wind turbine blade;
Figure 3A schematically illustrates an example of a fastener assembly which may be used to connect a first web to a second web;
Figure 3B shows one web and fastener of the example of figure 3A in more detail;
Figure 4A schematically illustrates an example of another web assembly; and
Figures 4B and 4C schematically illustrate elements of the example of figure 4A in more detail.

### DETAILED DESCRIPTION OF EXAMPLES

Reference now will be made in detail to embodiments of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one embodiment can be used with another embodiment to yield a still further embodiment. Thus, it is intended that the present disclosure covers such modifications and variations as come within the scope of the appended claims.

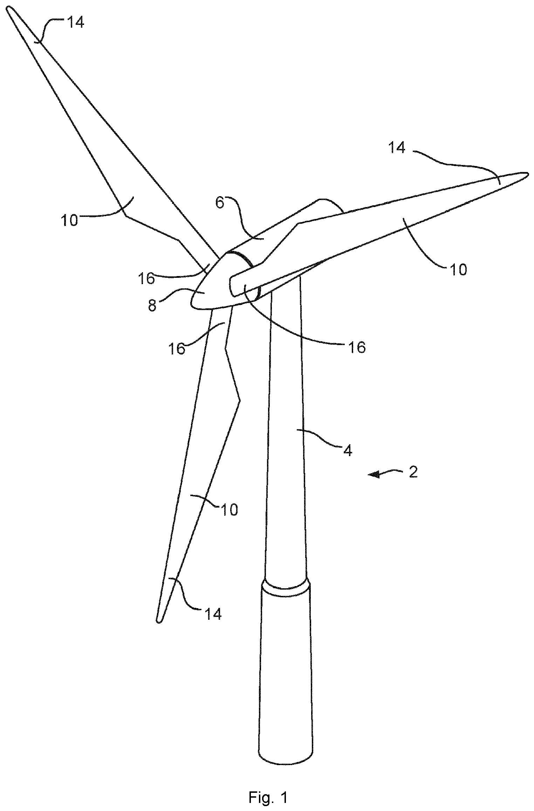

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

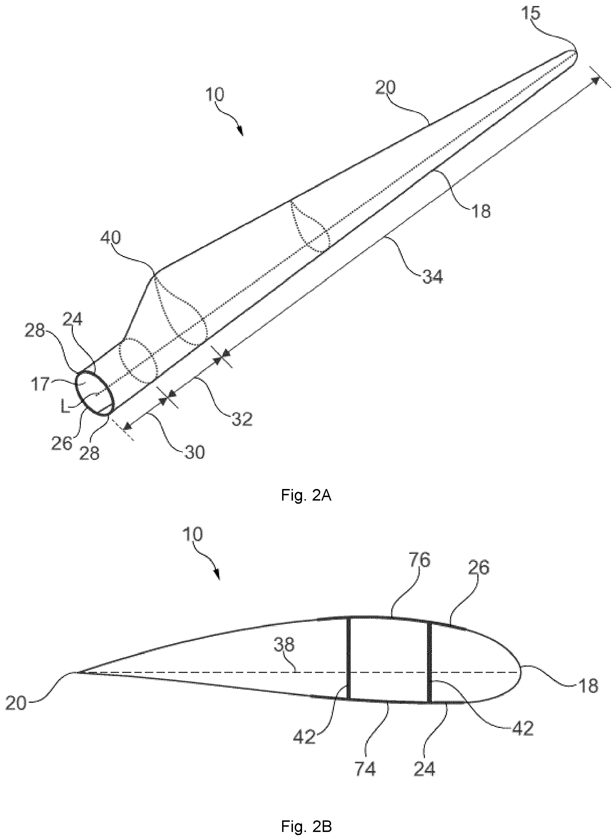

Fig. 2A shows a schematic view of an exemplary wind turbine blade 10. The wind turbine blade 10 has the shape of a conventional wind turbine blade with a root end 17 and a tip end 15 and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance from the hub. The airfoil region 34 has an airfoil profile with a chord extending between the leading edge 18 and the trailing edge 20 of the blade 10. The width of the chord decreases with increasing distance from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub. The wind turbine blade 10 comprises a blade shell comprising two blade shell parts or half shells, a first blade shell part 24 and a second blade shell part 26, typically made of fiber-reinforced polymer. The wind turbine blade 10 may comprise additional shell parts, such as a third shell part and/or a fourth shell part. The first blade shell part 24 is typically a pressure side or upwind blade shell part. The second blade shell part 26 is typically a suction side or downwind blade shell part. The first blade shell part 24 and the second blade shell part 26 are fastened together with adhesive, such as glue, along bond lines or glue joints 28 extending along the trailing edge 20 and the leading edge 18 of the blade 10. Typically, the root ends of the blade shell parts 24, 26 have a semi-circular or semi-oval outer cross-sectional shape.

Fig. 2B is a schematic diagram illustrating a cross sectional view of an exemplary wind turbine blade 10, e.g. a cross sectional view of the airfoil region of the wind turbine blade 10. The wind turbine blade 10 comprises a leading edge 18, a trailing edge 20, a pressure side 24, a suction side 26, a first spar cap 74, and a second spar cap 76. The wind turbine blade 10 comprises a chord line 38 between the leading edge 18 and the trailing edge 20. The wind turbine blade 10 comprises shear webs 42, such as a leading edge shear web and a trailing edge shear web. The shear webs 42 could alternatively be a spar box with spar sides, such as a trailing edge spar side and a leading edge spar side. The spar caps 74, 76 may comprise carbon fibers while the rest of the shell parts 24, 26 may comprise glass fibers.

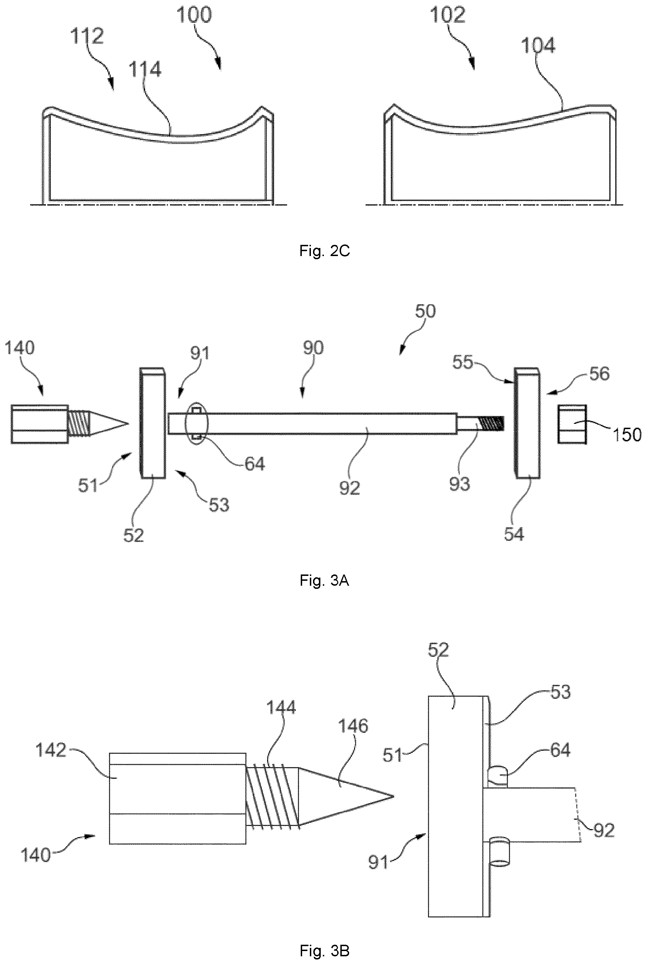

Fig. 2C is a schematic diagram illustrating an exemplary mold system for molding a blade shell of a wind turbine blade. The mold system 100 comprises a first mold 102 and a second mold 112. The first mold 102 is configured for manufacturing a first blade shell part of a wind turbine blade, such as an upwind shell part of the wind turbine blade (forming the pressure side). The second mold 112 is configured for manufacturing a second blade shell part of the wind turbine blade, such as a downwind shell part of the wind turbine blade (forming the suction surface).

Figure 3A schematically illustrates an example of a fastener assembly for connecting a first web 52 to a second web 54. Note that in the figures only a small portion of the webs are shown, and only a single fastener assembly. It should be clear that the webs may be significantly wider and longer than what is shown in the schematic figured. Also a plurality of fastener assemblies may typically be used to connect the webs.

An inside is defined between the first and second webs 52, 54, and an inner surface 53 of the first web 52 faces an inner surface 55 of the second web 54, an outer surface 51 of the first web 52 being arranged on an outside of the first web 52, and an outer surface 56 of the second web 54 being arranged an on outside of the second web 54.

The fastener assembly comprises a shaft 90, a first fastener 140, and a second fastener (not shown in figure 3A). The shaft has a first end 91 configured to be arranged with the first web 52, a second end 93 configured to be arranged on the outside of the second web 54, and a central portion 92 configured to be arranged between the first and second webs 52, 54.

The central portion 92 includes one or more stoppers 64 near the first end 91. The stoppers have a retracted position wherein the stoppers substantially do not protrude beyond an outer surface of the central portion 92 and a deployed position (such as shown in figure 3A) wherein the stoppers 64 protrude beyond the outer surface of the central portion 92 such that the first web 52 can be fixed between the stoppers 64 and the first fastener 140 when mounted on the first end 91 of the shaft 90.

The central portion 92 has a cross-sectional area that is larger than the cross-sectional area of the second end 93 such that the second web 54 can be fixed between the second fastener (not shown in figure 3A) when mounted on the second end 93 of the shaft 90 and the central portion 92 of the shaft 90.

The stoppers 64 are configured to be deployed from the outside of the first web 52.

In examples, the first end 91 of the shaft 90 may comprise a first thread configured to mate with a thread of the first fastener 140, and the second end 93 of the shaft 90 may comprise a second thread configured to mate with a thread of the second fastener 150. For example, the second fastener may be a nut 150 with an internal thread. The nut 150 may be mounted around the second end 93 of shaft 90. In other examples, alternative ways of coupling the fasteners on the shaft may be used, e.g. a bayonet coupling.

In the example of figure 3A, the first fastener 140 is configured to deploy the stoppers 64. The stoppers 64 in this example may be formed by spring biased pins 64 arranged inside the central portion 92 of the shaft 90. I.e. the default position of the pins 64 may be a retracted position wherein the pins do not significantly protrude beyond the outer surface of central portion 92. In the retracted position, the pins 64 may be substantially inside the shaft and do not impede movement of the shaft 90 through a hole in one of the webs.

The first fastener 140 may comprise a head portion 142, a threaded portion 144, and a distal tapered portion 146, see the example of figure 3B. The head portion 142 is shown to be proximally arranged in this example, and the head portion 142 is configured to engage the first web 52. The threaded portion 144 may mate with an internal thread inside the first end 91 of shaft 90. As the first fastener is threaded onto the shaft 90, the first fastener is displaced laterally, in the shown example, from the left to the right. As the first fastener 140 is displaced, the distal tapered portion 146 protrudes further into the inside of shaft 90 and can engage with the spring biased pins 64. As the tapered portion 146 continues to be displaced laterally, the spring biased pins 64 are progressively pushed into their deployed position. The first web 52 may thus be retained between the head portion 142 and the spring biased pins 64.

Although not shown in the example of figure 3A, on one or both outsides of the webs one or more washers may be arranged. I.e. the first web may be clamped or retained between the first fastener (in this example, the head portion 142 of fastener 140), one or more washers and the stoppers 64. The second web may be clamped or retained between the second fastener (e.g. a threaded nut), one or more washers and the central portion 92 of the shaft 90. The washers may be plain washers.

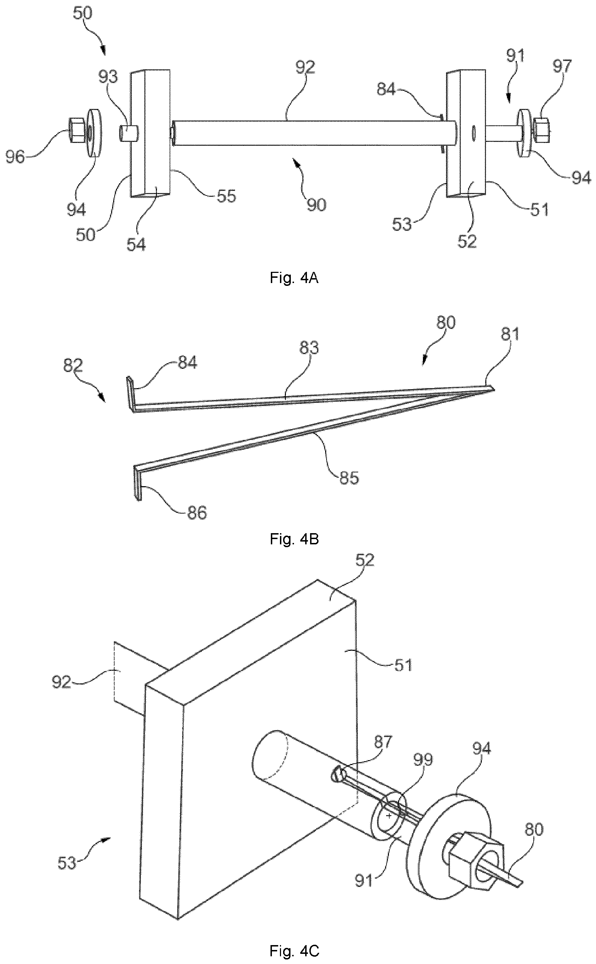

Figures 4A - 4C schematically illustrate another example of a fastener assembly which may be used in a similar manner. In figure 4A, a web assembly 50 is illustrated. The web assembly may be a main web assembly for a wind turbine blade. The main web assembly comprises a first shear web 52, and a second shear web 54. An inside is defined between the first and second shear webs 52, 54, and an inner surface 53 of the first web 52 faces an inner surface 55 of the second web 54, an outer surface 51 of the first web 52 being arranged on an outside of the first web 52, and an outer surface 56 of the second web 54 being arranged an on outside of the second web 54, similarly to what was depicted in the example of figure 3A.

The first and second shear webs 52, 54 are connected through a plurality of fastener assemblies. Note that only a single fastener assembly is shown in both examples, in reality a plurality of fastener assemblies may be used. The fastener assembly comprises a shaft 90, a first fastener 97, and a second fastener 96. The shaft 90 has a first end 91 arranged with the first shear web 52, a second end 93 arranged on the outside of the second shear web 54, and a central portion 92 arranged between the first and second shear webs 52 ,54.

The central portion 92 includes one or more stoppers 84 near the first end, the stoppers 84 having a retracted position wherein the stoppers substantially do not protrude beyond an outer surface of the central portion 92 and a deployed position wherein the stoppers 84 protrude beyond the outer surface of the central portion 92 such that the first shear web is fixed between the stoppers 84 and the first fastener 94 mounted on the first end 91 of the shaft 90.

As in the example of figure 4A, the central portion 92 has a cross-sectional area that is larger than a cross-sectional area of the second end 93 and the second shear web 54 is fixed between the second fastener 96 mounted on the shaft 90 and the central portion 92 of the shaft 90. The stoppers 84, 86 are configured to be deployed from an outside of the first shear web 52.

The first end 91 in this example extends through the first shear web 52 and is arranged on an outside of the first web 52. Both on the outside of the first shear web 52 and on the outside of the second shear web 54, washers 94 are arranged.

In the example of figure 4B, a fastener assembly includes a split pin 80 with resilient tines 83, 85. The tines 83, 85 comprise an upstanding portion 84, 86 at their distal ends 82. An operator can compress the split pin 80, pushing the resilient tines 83, 85 towards each other. The upstanding portions 84,86 in that situation may be regarded to be in a retracted position. The split pin 80 has a reduced height in cross-section and may be moved into the shaft 90 or be removed from the shaft.

As may be seen in figure 4C, the first end 91 of the shaft 90 comprises a slit 99. The upstanding portions 84, 86 are configured to extend through the slit 99 and form the stoppers. In the example, two slits 99 (one on the top and another at the bottom) are provided.

The slits 99 extend from the first portion 91 into the central portion 92. In the shown example, the slits 99 have a rounded opening 87 at the distal ends, through which the upstanding portions 84, 86 protrude outwardly to their deployed position.

One of the first and second shear webs 52, 54 may be a leading edge shear web, and the other of the first and second shear webs 52, 54 may be a trailing edge shear web. In a further aspect of the present disclosure, a wind turbine blade comprising such a main web assembly 50 is provided.

In the example of figure 4A, the second end 93 of the shaft 90 comprises a thread, and the second fastener 96 is a nut configured to mate with this thread.

In a further aspect, a method for assembling a web assembly is provided, particularly for a main web assembly of a wind turbine blade. The method comprises arranging a leading edge shear web with a trailing edge shear web such that an inner surface of the leading edge shear web faces an inner surface of the trailing edge shear web, an inside of the main web assembly being defined between the leading edge shear web and the trailing edge shear web.

The method further comprises connecting the leading edge shear web to the trailing edge shear by mounting a plurality of fastener assemblies. Either of the examples of figures 3A-3B and 4A-4C may be used. The mounting of one of the fastener assemblies comprises introducing a shaft 90 from an outside of the main web assembly through a hole in a first shear web 52 selected from the leading and trailing edge shear webs and subsequently through a hole in a second shear web 54 selected from the leading and trailing edge shear webs, until a second end 92 of the shaft 90 extends through the second shear web 54 to an outside of the main web assembly, and a central portion 92 of the shaft 90 engages with the second shear web 54. The first web may be the leading edge shear web, and in that case, the second web is the trailing edge shear web. The first web may be the trailing edge shear web, and in that case, the second web is the leading edge shear web.

The method further comprises deploying one or more stoppers (pins 64, or upstanding portions 84, 86) in the central portion 92 to protrude beyond an outer surface of the central portion 92 of the shaft 90 and mounting a first fastener 140, 97 on the first end 91 of the shaft 90 to retain the first shear web 52 between the stoppers 64, 84 and the first fastener 140, 97.

A second fastener 96 is mounted on the second end 93 of the shaft 90 to retain the second shear web 54 between the second fastener 96 and the central portion 92 of the shaft 90, the stoppers 64, 84 being deployed from an outside of the main web assembly.

It is noted that the fastener assemblies in the examples of figures 3A-3B and 4A-4C can be mounted from outside of the web assembly. No washers or other fasteners are arranged at an inside of the main web assembly. No operators need to access the space inside the web assembly. It should be clear that the order of the several method steps of this method can be changed.

In some examples, deploying of the stoppers comprises introducing a split pin 80 from an outside of the main web assembly through the first end 91 of the shaft 90, wherein the split pin comprises two tines 83, 85 comprising an upstanding portion 84, 86 at distal end 82 of the tines 83, 85 to form the stoppers. An operator may compress the split pin 80 to put the stoppers (upstanding portions 84, 86) into a retracted position for their introduction. In the retracted position, the upstanding portions 84, 86 do not extend beyond the outer surface of the shaft 90. After introduction, the upstanding portions 84, 86 extend through slits 99 in the central portion of the shaft.

In other examples, the central portion 92 comprises two spring biased pins forming the stoppers, the pins being deployed by mounting the first fastener, as was illustrated with respect to figures 3A-3B, the first fastener comprising a tapered portion which engages the spring biased pins as the first fastener is mounted at the first end of the shaft.

The method may further comprise removing the fastener assemblies after attaching the main web assembly to an upwind blade shell and a downwind blade shell, and particularly removing the fastener assemblies from the outside of the main web assembly.

This written description uses examples to disclose the present teaching, including the preferred embodiments, and also to enable any person skilled in the art to practice it, including making and using any devices or systems and performing any incorporated methods. The patentable scope is defined by the claims.

If reference signs related to drawings are placed in parentheses in a claim, they are solely for attempting to increase the intelligibility of the claim, and shall not be construed as limiting the scope of the claim.

## Claims

1. A fastener assembly for connecting a first web (52) to a second web (54),
wherein an inside is defined between the first (52) and second webs (54), and an inner surface (53) of the first web (52) faces an inner surface (55) of the second web (54), an outer surface (51) of the first web (52) being arranged on an outside of the first web (52), and an outer surface (56) of the second web (54) being arranged an on outside of the second web (54), the fastener assembly comprising:
a shaft (90), a first fastener (97; 140), and a second fastener (96; 150),
the shaft (90) having a first end (91) configured to be arranged with the first web (52), a second end (93) configured to be arranged on the outside of the second web (54), and a central portion (92) configured to be arranged between the first (52) and second webs (54), wherein
the central portion (92) includes one or more stoppers (64;84, 86) near the first end, the stoppers (64; 84, 86) having a retracted position wherein the stoppers (54; 84, 86) substantially do not protrude beyond an outer surface of the central portion (92) and a deployed position wherein the stoppers (64; 84, 86) protrude beyond the outer surface of the central portion (92) such that the first web (52) can be fixed between the stoppers and the first fastener (97; 140) when mounted on the first end (91) of the shaft (90), wherein
the central portion (92) has a cross-sectional area that is larger than the cross-sectional area of the second end (93) such that the second web (54) can be fixed between the second fastener (150; 96) when mounted on the second end (93) of the shaft (90) and the central portion (92) of the shaft, and
wherein the stoppers (64; 84, 86) are configured to be deployed from the outside of the first web (52).

2. The fastener assembly according to claim 1, wherein the first end (91) of the shaft comprises a first thread configured to mate with a thread (144) of the first fastener (140; 97), and the second end (93) of the shaft (90) comprises a second thread configured to mate with a thread of the second fastener (150; 96).

3. The fastener assembly according to claim 1 or 2, wherein the first fastener (140) is configured to deploy the stoppers (68).

4. The fastener assembly according to claim 3, wherein the stoppers are spring biased pins (64) arranged inside the central portion (92) of the shaft (90).

5. The fastener assembly according to claim 4, wherein the first fastener (140) comprises a head portion (142), a threaded portion (144), and a distal tapered portion (146), and wherein the distal tapered portion is configured to deploy the stoppers (64).

6. The fastener assembly according to claim 5, wherein the first end (91) of the shaft (90) has an internal thread, and the threaded portion of the first fastener (140) is configured to mate with the internal thread.

7. The fastener assembly according to claim 1 or 2, wherein the fastener assembly includes a split pin (80) with resilient tines (83, 85), the tines comprising an upstanding portion (84, 86) at their distal ends (82) and the first end of the shaft comprising a slit (99), and wherein the upstanding portions (84, 86) are configured to extend through the slit and form the stoppers.

8. The fastener assembly according to any of claims 1 - 7, further comprising a washer (84; 94) between the first fastener and the first web and/or between the second fastener and the second web.

9. A main web assembly (50) for a wind turbine blade, comprising:
a first shear web (52); and
a second shear web (54); wherein an inside is defined between the first and second shear webs (52, 54), and an inner surface (53) of the first web (52) faces an inner surface of the second web (54), an outer surface (51) of the first web (52) being arranged on an outside of the first web, and an outer surface of the second web being arranged an on outside of the second web, and wherein
the first and second shear webs (52, 54) are connected through a plurality of fastener assemblies according to any of claims 1 - 8.

10. The main web assembly of claim 9, wherein one of the first and second shear webs (52, 54) is a leading edge shear web, and the other of the first and second shear webs is a trailing edge shear web.

13. A method

14. A method

15. A method for assembling a main web assembly (50) of a wind turbine blade, comprising:
arranging a leading edge shear web with a trailing edge shear web such that an inner surface of the leading edge shear web faces an inner surface of the trailing edge shear web an inside of the main web assembly being defined between the leading edge shear web and the trailing edge shear web;
connecting the leading edge shear web to the trailing edge shear by mounting a plurality of fastener assemblies, wherein the mounting of one of the fastener assemblies comprises:
introducing a shaft (90) from an outside of the main web assembly through a hole in a first shear web (52) selected from the leading and trailing edge shear webs and subsequently through a hole in a second shear web (54) selected from the leading and trailing edge shear webs, until a second end (93) of the shaft (90) extends through the second shear web (54) to an outside of the main web assembly, and a central portion of the shaft (90) engages with the second shear web (54);
deploying one or more stoppers (64; 84, 86) in the central portion (92) to protrude beyond an outer surface of the central portion (92) of the shaft (90) and mounting a first fastener (97; 140) on the first end (91) of the shaft to retain the first shear web (52) between the stoppers and the first fastener;
mounting a second fastener (96; 150) on the second end (93) of the shaft (90) to retain the second shear web (54) between the second fastener (96; 150) and the central portion (92) of the shaft (90), wherein
the stoppers (64; 84, 86) are deployed from an outside of the main web assembly (50).

16. The method of claim 13, wherein the deploying of the stoppers comprises introducing a split pin (80) from an outside of the main web assembly through the first end (91) of the shaft (90), wherein the split pin (80) comprises two tines (83, 85) comprising an upstanding portion (84, 86) at distal end (82) of the tines to form the stoppers.

17. The method of claim 13, wherein the central portion (92) comprises two spring biased pins (64) forming the stoppers, and wherein the pins (64) are deployed by mounting the first fastener (140).

## Patentansprüche

1. Eine Befestigungsanordnung zum Verbinden einer ersten Steg (52) mit einer zweiten Steg (54),
wobei ein Innenraum zwischen dem ersten (52) und dem zweiten Steg (54) definiert ist und eine Innenfläche (53) des ersten Stegs (52) einer Innenfläche (55) des zweiten Stegs (54) gegenüberliegt, wobei eine Außenfläche (51) des ersten Stegs (52) an einer Außenseite des ersten Stegs (52) angeordnet ist und eine Außenfläche (56) des zweiten Stegs (54) an einer Außenseite des zweiten Stegs (54) angeordnet ist, wobei die Befestigungsanordnung umfasst:
ein Schaft (90), ein erstes Befestigungselement (97; 140) und ein zweites Befestigungselement (96; 150),
der Schaft (90) ein erstes Ende (91) aufweist, das so konfiguriert ist, dass es mit der ersten Steg (52) angeordnet ist, ein zweites Ende (93), das so konfiguriert ist, dass es an der Außenseite der zweiten Steg (54) angeordnet ist, und einen zentralen Abschnitt (92), der so konfiguriert ist, dass er zwischen der ersten (52) und der zweiten Steg (54) angeordnet ist, wobei
der zentrale Abschnitt (92) einen oder mehrere Stopper (64; 84, 86) in der Nähe des ersten Endes aufweist, wobei die Stopper (64; 84, 86) eine zurückgezogene Position, in der die Stopper (54; 84, 86) im Wesentlichen nicht über eine äußere Oberfläche des zentralen Abschnitts (92) hinausragen, und eine entfaltete Position aufweisen, in der die Stopper (64; 84, 86) über die äußere Oberfläche des zentralen Abschnitts (92) hinausragen, so dass der erste Steg (52) zwischen den Stoppern und dem ersten Befestigungselement (97; 140) befestigt werden kann, wenn er am ersten Ende (91) des Schafts (90) angebracht ist, wobei
der zentrale Abschnitt (92) eine Querschnittsfläche aufweist, die größer ist als die Querschnittsfläche des zweiten Endes (93), so dass der zweite Steg (54) zwischen dem zweiten Befestigungselement (150; 96), wenn es am zweiten Ende (93) des Schafts (90) angebracht ist, und dem Mittelabschnitt (92) der Schaft befestigt werden kann, und
wobei die Stopper (64; 84, 86) so konfiguriert sind, dass sie von der Außenseite der ersten Steg (52) entfaltet werden.

2. Befestigungsanordnung nach Anspruch 1, wobei das erste Ende (91) des Schafts ein erstes Gewinde aufweist, das so gestaltet ist, dass es mit einem Gewinde (144) des ersten Befestigungselements (140; 97) zusammenpasst, und das zweite Ende (93) des Schafts (90) ein zweites Gewinde aufweist, das so gestaltet ist, dass es mit einem Gewinde des zweiten Befestigungselements (150; 96) zusammenpasst.

3. Befestigungsanordnung nach Anspruch 1 oder 2, wobei das erste Befestigungselement (140) so gestaltet ist, dass es die Stopper (68) entfaltet.

4. Befestigungsanordnung nach Anspruch 3, wobei die Stopper federbelastete Stifte (64) sind, die innerhalb des zentralen Teils (92) des Schafts (90) angeordnet sind.

5. Befestigungsanordnung nach Anspruch 4, wobei das erste Befestigungselement (140) einen Kopfabschnitt (142), einen Gewindeabschnitt (144) und einen distalen verjüngten Abschnitt (146) umfasst, und wobei der distale verjüngte Abschnitt so konfiguriert ist, dass er die Stopper (64) entfaltet.

6. Befestigungsanordnung nach Anspruch 5, wobei das erste Ende (91) des Schafts (90) ein Innengewinde aufweist und der Gewindeabschnitt des ersten Befestigungselements (140) so konfiguriert ist, dass er mit dem Innengewinde zusammenpasst.

7. Befestigungsanordnung nach Anspruch 1 oder 2, wobei die Befestigungsanordnung einen Splint (80) mit elastischen Zinken (83, 85) umfasst, wobei die Zinken einen aufrechten Abschnitt (84, 86) an ihren distalen Enden (82) umfassen und das erste Ende des Schafts einen Schlitz (99) umfasst, und wobei die aufrechten Abschnitte (84, 86) so konfiguriert sind, dass sie sich durch den Schlitz erstrecken und die Stopper bilden.

8. Befestigungsanordnung nach einem der Ansprüche 1 bis 7, die ferner eine Unterlegscheibe (84; 94) zwischen dem ersten Befestigungselement und dem ersten Steg und/oder zwischen dem zweiten Befestigungselement und dem zweiten Steg umfasst.

9. Hauptsteganordnung (50) für ein Windturbinenblatt, umfassend:
einen ersten Schersteg (52); und
einen zweiten Schersteg (54); wobei ein Innenraum zwischen dem ersten und dem zweiten Schersteg (52, 54) definiert ist und eine Innenfläche (53) des ersten Stegs (52) einer Innenfläche des zweiten Stegs (54) gegenüberliegt, wobei eine Außenfläche (51) des ersten Stegs (52) an einer Außenseite des ersten Stegs angeordnet ist und eine Außenfläche des zweiten Stegs an einer Außenseite des zweiten Stegs angeordnet ist, und wobei
der erste und der zweite Schersteg (52, 54) durch eine Mehrzahl von Befestigungsanordnungen nach einem der Ansprüche 1 bis 8 verbunden sind.

10. Hauptsteganordnung nach Anspruch 9, wobei einer der ersten und zweiten Scherstegen (52, 54) eine Vorderkanten-ScherSteg ist und die andere der ersten und zweiten Scherstegen eine Hinterkanten-Schersteg ist.

13. Verfahren

14. Verfahren

15. Verfahren zum Zusammenbau einer Hauptsteganordnung (50) eines Windturbinenblattes, umfassend:
Anordnen eines Vorderkanten-Scherstegs mit einem Hinterkanten-Schersteg, so dass eine Innenfläche des Vorderkanten-Scherstegs einer Innenfläche des Hinterkanten-Scherstegs gegenüberliegt, wobei das Innere der Hauptsteganordnung zwischen dem Vorderkanten-Schersteg und dem Hinterkanten-Schersteg definiert ist;
Verbinden der Vorderkantenschersteg mit der Hinterkantenschere durch Anbringen einer Vielzahl von Befestigungsanordnungen, wobei das Anbringen einer der Befestigungsanordnungen umfasst:
Einführen eines Schafts (90) von einer Außenseite der Hauptstegbaugruppe durch ein Loch in einer ersten Schersteg (52), die aus der vorderen und der hinteren Kantenschersteg ausgewählt wird, und anschließend durch ein Loch in einer zweiten Schersteg (54), die aus der vorderen und der hinteren Kantenschersteg ausgewählt wird, bis sich ein zweites Ende (93) der Schaft (90) durch die zweite Schersteg (54) zu einer Außenseite der Hauptstegbaugruppe erstreckt und ein zentraler Abschnitt des Schafts (90) mit der zweiten Schersteg (54) in Eingriff kommt;
Entfalten eines oder mehrerer Stopper (64; 84, 86) in dem zentralen Abschnitt (92), um über eine äußere Oberfläche des zentralen Abschnitts (92) des Schafts (90) hinauszuragen, und Anbringen eines ersten Befestigungselements (97; 140) an dem ersten Ende (91) des Schafts, um den ersten Schersteg (52) zwischen den Stoppern und dem ersten Befestigungselement festzuhalten;
Anbringen eines zweiten Befestigungselements (96; 150) am zweiten Ende (93) der Schaft (90), um den zweiten Schersteg (54) zwischen dem zweiten Befestigungselement (96; 150) und dem zentralen Abschnitt (92) der Schaft (90) zu halten, wobei
die Stopper (64; 84, 86) von der Außenseite der Hauptsteganordnung (50) aus eingesetzt werden.

16. Verfahren nach Anspruch 13, wobei das Entfalten der Stopper das Einführen eines Splintes (80) von einer Außenseite der Hauptsteganordnung durch das erste Ende (91) des Schaftes (90) umfasst, wobei der Splint (80) zwei Zinken (83, 85) umfasst, die einen aufrechten Abschnitt (84, 86) am distalen Ende (82) der Zinken aufweisen, um die Stopper zu bilden.

17. Verfahren nach Anspruch 13, wobei der zentrale Abschnitt (92) zwei federbelastete Stifte (64) umfasst, die die Stopper bilden, und wobei die Stifte (64) durch Anbringen des ersten Befestigungselements (140) entfaltet werden.

## Revendications

1. Ensemble de fixation pour relier une première âme (52) à une seconde âme (54),
dans lequel un intérieur est défini entre la première (52) et la seconde âme (54), et une surface intérieure (53) de la première âme (52) fait face à une surface intérieure (55) de la seconde âme (54), une surface extérieure (51) de la première âme (52) étant disposée à l'extérieur de la première âme (52), et une surface extérieure (56) de la seconde âme (54) étant disposée à l'extérieur de la seconde âme (54), l'ensemble de fixation comprenant:
un arbre (90), un premier élément de fixation (97 ; 140), et un second élément de fixation (96 ; 150),
l'arbre (90) ayant une première extrémité (91) configurée pour être disposée avec la première âme (52), une deuxième extrémité (93) configurée pour être disposée à l'extérieur de la deuxième âme (54), et une partie centrale (92) configurée pour être disposée entre la première (52) et la deuxième âme (54), dans laquelle
la partie centrale (92) comprend une ou plusieurs butées (64;84, 86) près de la première extrémité, les butées (64 ; 84, 86) ayant une position rétractée dans laquelle les butées (54 ; 84, 86) ne font pratiquement pas saillie au-delà d'une surface extérieure de la partie centrale (92) et une position déployée dans laquelle les butées (64 ; 84, 86) dépassent la surface extérieure de la partie centrale (92) de sorte que la première âme (52) peut être fixée entre les buttées et le premier élément de fixation (97 ; 140) lorsqu'elle est montée sur la première extrémité (91) de l'arbre (90), dans laquelle
la partie centrale (92) a une surface de section transversale plus grande que la surface de section transversale de la deuxième extrémité (93) de sorte que la deuxième âme (54) peut être fixée entre le deuxième élément de fixation (150 ; 96) lorsqu'elle est montée sur la deuxième extrémité (93) de l'arbre (90) et la partie centrale (92) de l'arbre, et
dans lequel les éléments de fixation (64 ; 84, 86) sont configurés pour être déployés à partir de l'extérieur de la première âme (52).

2. L'ensemble de fixation selon la revendication 1, dans lequel la première extrémité (91) de l'arbre comprend un premier filetage configuré pour s'accoupler avec un filetage (144) du premier élément de fixation (140 ; 97), et la deuxième extrémité (93) de l'arbre (90) comprend un deuxième filetage configuré pour s'accoupler avec un filetage du deuxième élément de fixation (150 ; 96).

3. L'ensemble de fixation selon la revendication 1 ou 2, dans lequel le premier élément de fixation (140) est configuré pour déployer les bouchons (68).

4. L'ensemble de fixation selon la revendication 3, dans lequel les butées sont des goupilles à ressort (64) disposées à l'intérieur de la partie centrale (92) de l'arbre (90).

5. L'ensemble de fixation selon la revendication 4, dans lequel le premier élément de fixation (140) comprend une partie tête (142), une partie filetée (144), et une partie distale conique (146), et dans lequel la partie distale conique est configurée pour déployer les bouchons (64).

6. L'ensemble de fixation selon la revendication 5, dans lequel la première extrémité (91) de l'arbre (90) a un filetage interne, et la partie filetée de la première fixation (140) est configurée pour s'accoupler avec le filetage interne.

7. L'ensemble de fixation selon la revendication 1 ou 2, dans lequel l'ensemble de fixation comprend une goupille fendue (80) avec des dents élastiques (83, 85), les dents comprenant une partie dressée (84, 86) à leurs extrémités distales (82) et la première extrémité de la tige comprenant une fente (99), et dans lequel les parties dressées (84, 86) sont configurées pour s'étendre à travers la fente et former les bouchons.

8. L'ensemble de fixation selon l'une des revendications 1 à 7, comprenant en outre une rondelle (84 ; 94) entre le premier élément de fixation et la première âme et/ou entre le deuxième élément de fixation et la deuxième âme.

9. Ensemble d'âme principale (50) pour une pale d'éolienne, comprenant :
une première âme de cisaillement (52) ; et
une seconde âme de cisaillement (54) ; dans laquelle un intérieur est défini entre la première et la seconde âme de cisaillement (52, 54), et une surface intérieure (53) de la première âme (52) fait face à une surface intérieure de la seconde âme (54), une surface extérieure (51) de la première âme (52) étant disposée à l'extérieur de la première âme, et une surface extérieure de la seconde âme étant disposée à l'extérieur de la seconde âme, et dans laquelle
les première et deuxième âmes de cisaillement (52, 54) sont reliées par une pluralité d'ensembles de fixation selon l'une des revendications 1 à 8.

10. L'ensemble d'âme principale de la revendication 9, dans lequel l'une des premières et secondes âmes de cisaillement (52, 54) est une âme de cisaillement de bord d'attaque, et l'autre des premières et secondes âmes de cisaillement est une âme de cisaillement de bord de fuite.

13. Procédé

14. Procédé

15. Procédé d'assemblage d'une âme principale (50) d'une pale d'éolienne, comprenant :
disposer une âme de cisaillement du bord d'attaque avec une âme de cisaillement du bord de fuite de telle sorte qu'une surface intérieure de l'âme de cisaillement du bord d'attaque fasse face à une surface intérieure de la âme de cisaillement du bord de fuite, l'intérieur de l'assemblage principal étant défini entre la âme de cisaillement du bord d'attaque et la âme de cisaillement du bord de fuite ;
relier l'âme de cisaillement du bord d'attaque a l'âme cisaillement du bord de fuite par le montage d'une pluralité d'ensembles de fixation, le montage de l'un des ensembles de fixation comprenant :
introduire un arbre (90) depuis l'extérieur de l'ensemble de âme principale à travers un trou dans une première âme de cisaillement (52) choisie parmi les âmes de cisaillement du bord d'attaque et du bord de fuite, puis à travers un trou dans une deuxième âme de cisaillement (54) choisie parmi les âmes de cisaillement du bord d'attaque et du bord de fuite, jusqu'à ce qu'une deuxième extrémité (93) de l'arbre (90) s'étende à travers la deuxième âme de cisaillement (54) jusqu'à l'extérieur de l'ensemble de âme principale, et qu'une partie centrale de l'arbre (90) s'engage dans la deuxième âme de cisaillement (54) ;
déployer une ou plusieurs buttées (64 ; 84, 86) dans la partie centrale (92) pour dépasser une surface extérieure de la partie centrale (92) de l'arbre (90) et monter un premier élément de fixation (97 ; 140) sur la première extrémité (91) de l'arbre pour retenir la première âme de cisaillement (52) entre les buttées et le premier élément de fixation ;
monter un deuxième élément de fixation (96 ; 150) sur la deuxième extrémité (93) de l'arbre (90) pour retenir la deuxième âme de cisaillement (54) entre le deuxième élément de fixation (96 ; 150) et la partie centrale (92) de l'arbre (90), dans laquelle
les buttées (64 ; 84, 86) sont déployés depuis l'extérieur de l'âme principale (50).

16. Procédé de la revendication 13, dans laquelle le déploiement des bouchons comprend l'introduction d'une goupille fendue (80) depuis l'extérieur de l'assemblage de l'âme principale à travers la première extrémité (91) de l'arbre (90), dans laquelle la goupille fendue (80) comprend deux dents (83, 85) comprenant une partie dressée (84, 86) à l'extrémité distale (82) des dents pour former les buttées.

17. Procédé de la revendication 13, dans laquelle la partie centrale (92) comprend deux goupilles à ressort (64) formant les buttées, et dans laquelle les goupilles (64) sont déployées par le montage du premier élément de fixation (140).
